# EUROPEAN PATENT APPLICATION

(11) **EP 4 847 240 A1**
(43) Date of publication of application: **02.12.2026**
(21) Application number: 26181725.8
(22) Date of filing: 28.05.2026
(51) Int. Cl.: B29C 70/32, B29C 70/52, B29D 99/00, F16C 1/00, B29C 70/08, B65H 75/24, B29C 70/54

(54) **IMPROVED MANUFACTURING PROCESS OF A LOW-INERTIA EXPANDING SHAFT WITH LEDGES AND SEMI-FINISHED CENTRAL BODY AND EXPANDING SHAFT WITH LEDGES MANUFACTURED BY SAID PROCESS**

(30) Priority: 30.05.2025 IT 202500012592
(71) Applicant: LAMIFLEX S.p.A., 24028 Ponte Nossa (Bergamo) (IT)
(72) Inventor: PERANI, Marco, 24028 Ponte Nossa (BG) (IT); VISINI, Christian, 24028 Ponte Nossa (BG) (IT)
(74) Representative: Faggioni, Marco

(57) **Abstract**

Manufacturing process of an expanding shaft with ledges for the rotary support of film reels including the steps of:
- forming an inner tubular portion (1);
- juxtaposing a plurality of outer longitudinal portions (3) on the entire external surface of said tubular portion (1), in such a way as to form a continuous external cylindrical surface, and delimit, with their lateral surfaces, longitudinal channels (5) for housing ledges (8) and respective underlying air chambers (9);
- removing by machining lateral external edges of said outer longitudinal portions (3) to form rectangular access slots in said channels (5).

The invention also relates to a semi-finished central body (C) of an expanding shaft with ledges and to an expanding shaft with ledges obtained through said manufacturing process.

## Description

### FIELD OF THE INVENTION

The present invention relates to an improved manufacturing process of a low-inertia expanding shaft with ledges. The invention especially discloses an improved manufacturing process of an expanding shaft with ledges whose central body is entirely made of carbon fibre composite materials. The invention also relates to a semi-finished central body of an expanding shaft with ledges and to a low-inertia expanding shaft with ledges manufactured by means of said improved manufacturing process.

### PRIOR STATE OF THE ART

Expanding shaft with ledges is a widely used mechanical component in many industrial sectors, whenever there is a need to wind or unwind a reel of film of any material, such as, for example, plastic, fabric, paper, nonwoven or other sheet materials in general, and possibly coupled films of said materials.

The widespread use of the shafts with ledges compared to other constructive solutions (e.g., the keyed shafts) is due to its wide versatility of use, especially in the industrial sectors of converting, printing, paper and nonwoven production, for example in machinery such as winding machines or printing machines. Considering that the ledges extend along its entire length, the expanding shaft with ledges allows reels of various heights to be handled, and even reels cut to different widths depending on the specific requirements, while always providing a very stable and secure grip.

Furthermore, shafts with ledges can be provided with two sets of ledge-housing channels of different depths, so that the ledges of a first set of ledges, with a reduced stroke, only make initial centring contact with the inner core of the reel, while the ledges of a second set of ledges, with a full stroke, are activated at a later stage, to completely block the reel, which, at this step, has already been axially centred by the action of the first set of ledges. This configuration of the expanding shaft with ledges allows therefore for automatic and rapid centring of the reels during winding, especially when multiple reels are cut to size. A self-centring expanding shaft is an essential functional requirement in the machinery in the above-mentioned sectors, and the expanding shaft with ledges is the one that best meets this requirement.

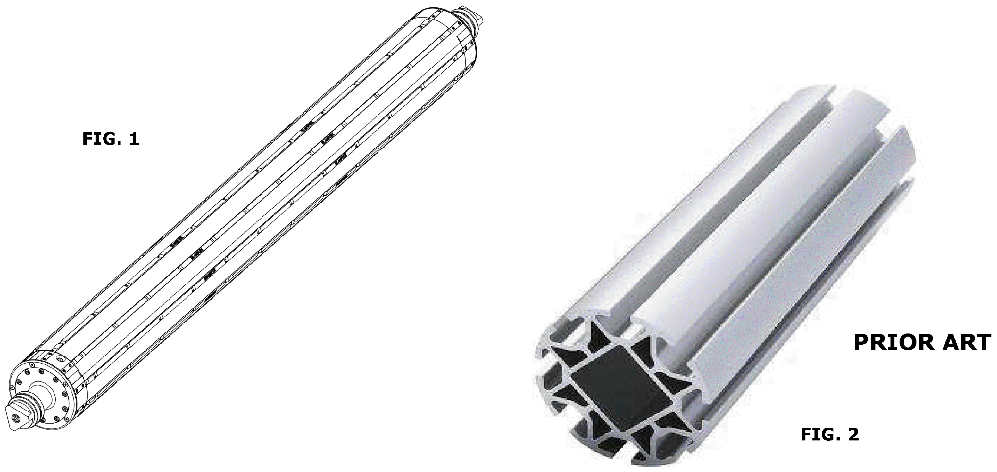

Patent IT-102020000023854 (2022) in the name of the same Applicant describes an expanding shaft with ledges made of low inertia composite material, typically with a diameter equal to or greater than 150 mm (for supporting 6" cores) as illustrated in fig. 1, and a manufacturing process which makes use of different integrated technologies.

The above prior art document highlights the lightweight benefits of this expanding shaft with ledges compared to alternative solutions already available on the market, both in metal, such as those manufactured by means of extrusion technology from aluminium, and in conventional composite material, such as those manufactured from a tubular profile wherein the ledge-housing channels are then formed by machining. In addition to the advantage of greater lightness, the expanding shaft with ledges disclosed by IT-102020000023854 also offers the potential benefit of increased mechanical strength compared to alternative versions in composite material, entirely manufactured by means of pultrusion technology, which suffer from severe limitations on mechanical strength in the radial direction.

Despite the improvements highlighted above, in some applications with less demanding load levels, aluminium expanding shafts with well-optimized extrusion profiles - for example of the type illustrated in Fig. 2 - which are not significantly heavier than the solution proposed by IT-102020000023854 and are certainly simpler and more economical to manufacture, remain valid alternatives. These metallic expanding shafts with optimized cross-section anyhow certainly exhibit lower basic performance than the composite material expanding shaft with ledges described in IT-102020000023854, especially under most critical operating conditions.

In applications such as nonwoven rewinders and paper mill rewinders, these expanding shafts must support effective working widths of nearly 6 meters. Furthermore, these application sectors also require: a significant reduction in vibration to improve the production processes which are very critical per se; further lightweighting of the expanding shafts, well beyond that offered by current optimized aluminium versions; and, finally, also a much higher critical rotational speed during acceleration phases. All these application requirements should therefore have driven users to focus on advanced constructive solutions in composite material, wherein the higher manufacturing costs are justified by clear benefits in terms of production efficiency.

Indeed, the market welcomed with interest the favourable results of the expanding shaft with ledges described in the above-mentioned patent IT-102020000023854 but, despite this, still showed a certain reluctance to change, precisely because the expectations about the improvement levels were actually higher.

In addition to such attitude of the market, it must also be admitted that the manufacturing process described in IT-102020000023854 quickly proved problematic in some respects, when moving from the prototyping phase to the industrialization and production phases.

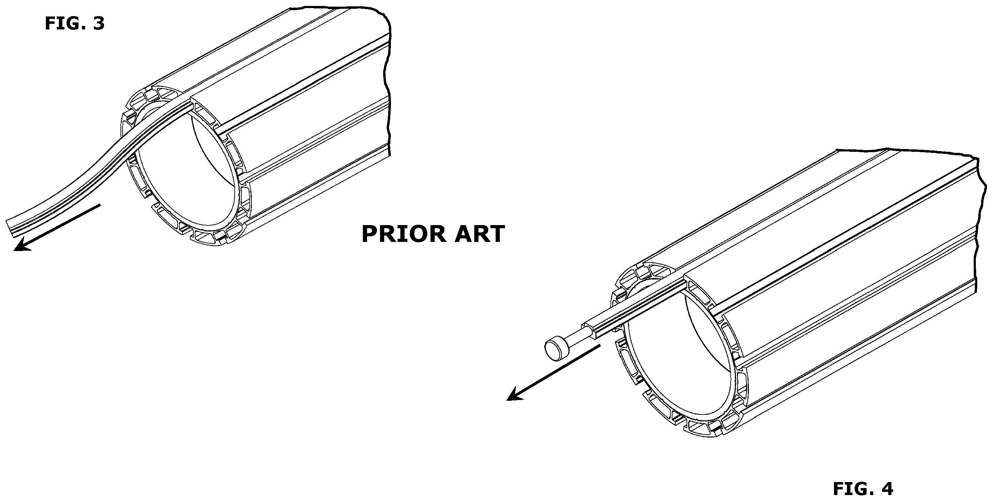

For example, during the assembly of the hollow profiles on the machined inner tube through the lamination of layers of fabric or unidirectional carbon fibre pre-impregnated with resin, the use of longitudinal silicone inserts in the channel between adjacent hollow profiles gave rise to significant operational difficulties and consequent inconveniences in the post-moulding extraction step (Fig. 3), as these longitudinal silicone inserts suffered premature damage during the extraction step thereof, thus requiring their early replacement after only a couple of moulding operations. This resulted in a corresponding complication of the production process and significant increase in costs beyond those initially estimated. Furthermore, a possible alternative option, wherein the longitudinal silicone inserts were replaced by metal mandrels having the same geometric configuration was also tested and then abandoned, not only due to the high cost and difficulty of implementation, but also to the potentially high criticality of their use. The mandrel axial extraction process (Fig. 4) is, in fact, complicated both by the risk of it becoming stuck in the channel within which is housed, and by the high probability that the mandrels could laterally bend during the extraction step, especially when made full-length, thus becoming unusable for insertion into a channel in a subsequent moulding operation. In order to reduce the mandrel free length and therefore reduce the risk of bending, it was then also considered to produce mandrels half the length (approximately 3 meters) compared to the maximum working length of an expanding shaft with ledges (approximately 6 meters); however, only a partial reduction in the risk of bending would thus be achieved, this would create a logistical complication related to the double step of mandrel extraction, from both ends of the expanding shaft with ledges, and in opposite directions.

Furthermore, even for metal mandrels, the risk of having to replace them frequently would lead to unsustainable costs. This last reason was therefore sufficient to cause this alternative option to be abandoned.

Therefore, the construction process proposed by IT-102020000023854 which used longitudinal silicone inserts, although suitable for prototyping, has shown strong technical limitations in the industrial production of expanding shafts.

Finally, the current needs of the application market demand more efficient constructive solutions in terms of stiffening and lightening of the expanding shaft with ledges of the present invention, to increase the performance gap compared to the most advanced metal versions in aluminium alloys, thus encouraging users to switch to expanding shafts in composite materials.

The problem addressed by the present invention is therefore to develop a new manufacturing process of an expanding shaft with ledges having a diameter greater than or equal to 150 mm and a shape like that of the expanding shaft with ledges disclosed and illustrated in IT-102020000023854, while avoiding the above-mentioned drawbacks of the related manufacturing process.

In the context of this problem, a first object of the invention is to provide a manufacturing process of an expanding shaft with ledges in composite materials which does not use longitudinal silicone inserts or metal mandrels to maintain the necessary patency and cleanliness of the ledge-housing channels.

A second object of the invention is to provide a central body for an expanding shaft with ledges in composite material of reduced thickness and therefore reduced weight, while maintaining high strength both in the longitudinal direction and in the transverse and torsional directions.

A third object of the invention is to provide a process for manufacturing an expanding shaft with ledges provided with an increased critical rotational speed.

### SUMMARY OF THE INVENTION

This problem is solved, and these objects achieved, by a manufacturing process of an expanding shaft with ledges having the features defined in claim 1, by a semi-finished central body product having the features defined in claim 9, and by an expanding shaft with ledges having the features defined in claim 10. Other preferred features of the afore mentioned manufacturing process of an expanding shaft with ledges and of the expanding shaft with ledges manufactured by said process are defined in the secondary claims.

### BRIEF DESCRIPTION OF THE DRAWINGS

Further features and advantages of the manufacturing process of an expanding shaft with ledges according to the present invention will anyhow become more evident from the following detailed description of a preferred embodiment of the same, given by mere way of non-limiting example and illustrated in the accompanying drawings, wherein:
Fig. 1 is a perspective view of an assembly of expanding shaft with ledges according to the present invention;
fig. 2 is a perspective view of an assembly of expanding shaft with ledges in aluminium alloy with optimized cross-section;
fig. 3 is a perspective view illustrating the step of longitudinal extraction of a silicone rubber insert from the cylindrical body of an expanding shaft with ledges according to IT-102020000023854;
Fig. 4 is a perspective view illustrating the step of longitudinal extraction of a metal mandrel from the cylindrical body of an expanding shaft with ledges according to IT-102020000023854;
fig. 5 is a perspective view of one end of the inner tube of the central body of the expanding shaft with ledges of fig. **1****;**
fig. 6 is a perspective view illustrating a portion of the inner tube of fig. 5 on which multiple adjacent longitudinal hollow profiles are positioned which form the surface of the expanding shaft with ledges and delimit housing channels for the mobile ledges;
Fig. 7A is a perspective view illustrating the inner surface of some adjacent hollow profiles according to the present invention, the inner tube supporting them not being shown here for clarity;
fig. 7B is a perspective view like fig. 7A illustrating some adjacent hollow profiles according to IT-102020000023854, the inner tube supporting them not being shown here for clarity;
fig. 8 is a complete cross-sectional view of the central body of the expanding shaft with ledges of the invention;
fig. 9 is a perspective view of one end of the central body of the expanding shaft with ledges of the invention on which a fixing ring of the hollow profiles is mounted;
fig. 10 is a perspective view of a head mounted on the central body of the expanding shaft with ledges of fig. **1****;**
fig. 11 is a perspective view of just the head of fig. 10 from an opposite direction, which shows the head inner portion which, once assembled, is housed inside the central body of the expanding shaft with ledges;
fig. 12 is an axial, longitudinal section view of one end of the expanding shaft with ledges of fig. 1, showing the head of fig. 10 and a metal support journal;
fig. 13 is an enlarged perspective view of a portion of fig. 10, illustrating the air chambers and the mobile ledges housed in their respective channels;
fig. 14 is an enlarged detail of a compressed air supply pin inside an air chamber;
fig. 15 is a perspective view like fig. 13 illustrating an annular disk for front closure of the channels housing the air chambers and the ledges; and
fig. 16 is a perspective sectional view showing the inner portion of the support journals and their lightening holes.

### DETAILED DESCRIPTION OF THE PREFERRED EMBODIMENT

The manufacturing process of an expanding shaft with ledges according to the present invention is preferably used for manufacturing an expanding shaft with ledges having an outer diameter typically equal to or greater than 150 mm, for use with reel cores of 6" (152.4 mm) or larger as the inner diameter, according to the same general constructive concepts as those provided by the manufacturing process described in IT-102020000023854.

The central body of the expanding shaft with ledges is therefore entirely made of carbon fibre composite material with a manufacturing process which involves a particular combined and progressive (multi-step) use of the various known technologies for the processing of composite materials, in order to carry out the construction of an inner tubular portion and of multiple outer longitudinal portions with constant cross-section apt to obtain the desired cylindrical surface of the expanding shaft with ledges, then their mutual assembly and finally the co-polymerization of such portions to obtain the desired finished product.

In accordance with the objects of the invention, the purpose of the inventors was in fact to obtain a product with a constant cross-section profile of complex shape including large lightening openings, and provided with high mechanical strength in both the longitudinal and transverse and torsional directions, which product, as discussed in detail above, cannot be made with a conventional construction according to any of the various known technologies.

### Central body of the expanding shaft with ledges

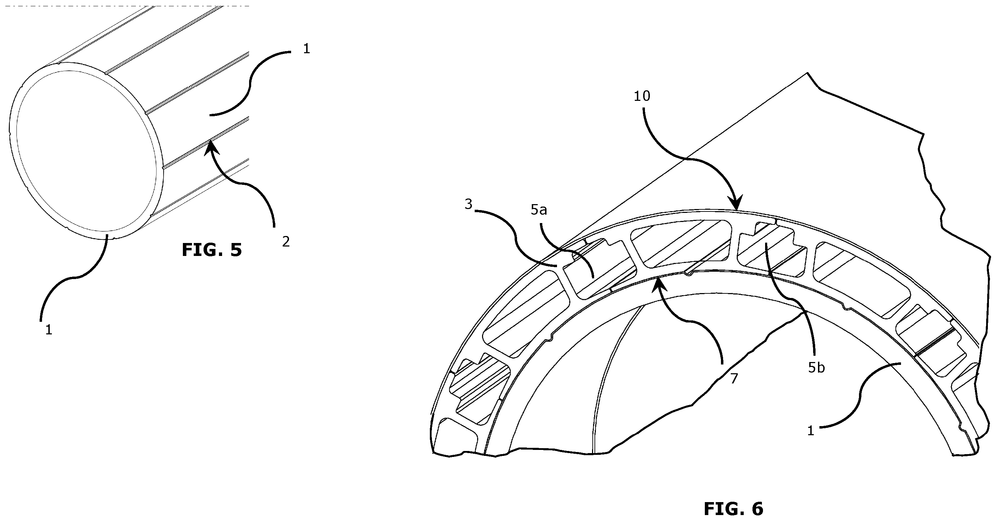

In particular, the central body of the expanding shaft with ledges of the present invention comprises a first tubular portion (figures 5 and 6) consisting of an inner tube 1 and a plurality of longitudinal portions consisting of hollow profiles 3 arranged externally to the inner tube 1 to entirely cover its external surface with their mutually adjacent bases **4.** The cross-section of the hollow profiles 3 is such as to form, between each pair of adjacent hollow profiles 3, housing channels 5 for the ledges. In a preferred embodiment, the outer wall of the hollow profiles 3 has different thickness on the two sides, so as to determine channels 5 of different heights alternating along the surface of the expanding shaft with ledges for housing, respectively, reel centring ledges in the channels 5b having a lower height and reel blocking ledges in the channels 5a having a greater height.

The inner tube 1 is preferably manufactured by means of filament winding technology, or alternatively, it can also be manufactured by means of wrapping technology. Once it is manufactured, a series of longitudinal grooves 2 are milled into the external surface of the inner tube 1, for correct centring of the hollow profiles 3. Thanks to the used construction technology, the carbon fibres in the inner tube 1 are arranged in various, mutually inclined and crossed orientations, to meet the strength and stiffness requirements in both the longitudinal and transverse and torsional directions.

To achieve maximum lightening of the inner tube 1, its thickness can be reduced to 4-4.5 mm by using a high percentage of ultra-high modulus carbon fibre (commercially available as K13916 Dialed Sumitomo fibre, CN-80 from NGF Nippon Graphite Fibre) to increase its specific stiffness.

The hollow profiles 3 are instead individually manufactured by pultrusion technology, according to which the carbon fibres are typically arranged parallel to the axial direction of the expanding shaft with ledges. The hollow profiles 3 have indeed a large inner cavity, to impart the desired lightness to the finished product, and their wall thickness is as low as 2 mm. According to a main feature of the present invention, unlike what disclosed in the closest prior art of IT-102020000023854, the external cylindrical surface of the hollow profiles 3 also extend in lateral wings which are long enough to come into mutual contact in the final assembly position on the inner tube 1, similarly to the internal wings which are lied on said inner tube **1.** The channels 5 formed between adjacent hollow profiles 3 are therefore formed, in the initial phase of the manufacturing process, as closed cavities. Finally, as already disclosed by the manufacturing process described in IT-102020000023854, on the lower side of the base 4 of the hollow profiles 3, a longitudinal rib 6 is provided for mating with a corresponding, longitudinal, centring groove 2, formed on the external surface of the inner tube **1.**

Also, the lower and upper cylindrical surfaces of the hollow profiles 3 are preferably roughened already during the manufacturing step, to ensure a correct adhesion in the subsequent steps of construction of the expanding shaft with ledges and avoid any surface machining on the hollow profiles 3 themselves.

The number of hollow profiles 3 to be applied to the inner tube 1 obviously varies according to the size of the hollow profiles 3 and the diameter of the inner tube 1, which is in turn closely related to the final diameter of the expanding shaft with ledges; for a 150 mm expanding shaft with ledges for 6" tubular cores, which is currently the most popular size on the market, ten hollow profiles 3 are preferably used which form ten corresponding channels 5, alternating between reel-centring channels 5b and reel-locking channels 5a.

The various portions of the central body of the expanding shaft with ledges described above are mutually assembled in an assembly step by means of a binding layer 7 of pre-impregnated carbon fibre-based material laid by lamination on the external surface of the inner tube 1, before positioning the hollow profiles 3 on the same surface. For this purpose, either a unidirectional material or a fabric (0.2-0.3 mm indicative layer thickness) can be used. Said binding layer 7 can be continuously wrapped over the entire external surface of the inner tube 1 by means of wrapping technology, or, alternatively, longitudinal strips of pre-impregnated material can be manually positioned between pairs of adjacent grooves 2 thus facilitating the subsequent centring of the hollow profiles 3, given the fact that with this second lamination method the grooves 2 remain completely uncovered.

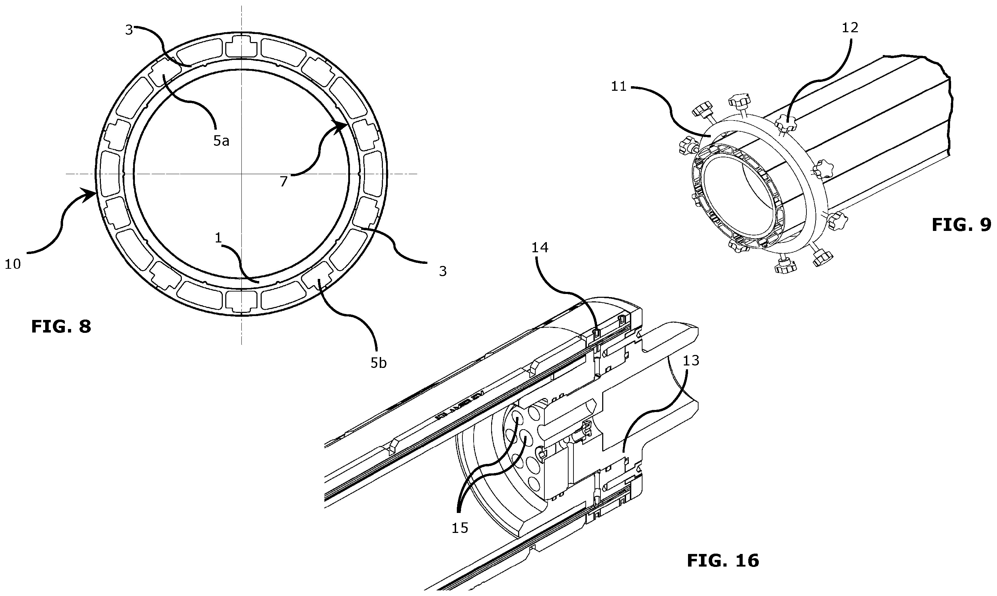

Unlike the process described in IT-102020000023854, thanks to the fact that the adjacent hollow profiles 3 are in mutual contact even in correspondence of their external wings, as clearly visible in the cross-sectional view of the central body of the expanding shaft with ledges in fig. 8, the manufacturing process according to the present invention does not require the use of longitudinal silicone inserts or metal mandrels within the channels 5 to ensure the cleanliness of their relative walls for subsequent insertion of the ledges, since said channels are already basically closed towards the outside thanks to the contact between the opposing ends of the aforementioned external wings.

The hollow profiles 3 are mounted onto the inner tube 1 by means of suitable temporary clamping fixtures - for example consisting of fixing rings 11 of the type illustrated in Fig. 9, with a diameter much larger than the expanding shaft with ledges - into which radial screws 12 are inserted which can be tightened until contacting the inner tube 1 and/or the hollow profiles 3 as these latter are mounted in position, without the need to insert longitudinal silicone inserts or metal mandrels inside the channels 5a and 5b, which therefore remain empty. The hollow profiles 3 must not interfere with each other in their relative positions; therefore, a non-perfect contact between the opposing ends of their external wings may occur during assembly, with a minimal play remaining between them. In this case, before performing the final lamination step on the central body of the expanding shaft with ledges, it is advisable to insert discontinuous tapes of a pre-impregnated material based on unidirectional carbon fibres with low resin fluidity into the remaining gaps between adjacent hollow profiles 3, in correspondence of their external wings, to prevent any possible subsequent resin leakage into the channels 5a and 5b, which are the ledge-housing seats. This safety gap closure is advisable because the pre-impregnated fabric used for the outer lamination of the central body of the expanding shaft with ledges is provided with a high resin fluidity, and therefore the impregnating resin could leach through said gaps into said channels, contaminating their surfaces.

Thanks to this innovative manufacturing process of the central body of the expanding shaft with ledges according to the invention, two immediate advantages are achieved compared to the known process described in patent IT-102020000023854.

A first significant advantage is, obviously, the elimination of silicone inserts or metal mandrels and their associated complicated procedures of insertion and extraction, as previously described. In addition to significantly simplifying manufacturing, the process of the present invention has also led to a significant reduction in costs; the silicone inserts (or metal mandrels) are indeed also consumables, as a significant portion of these elements is damaged at each extraction step and must therefore be replaced.

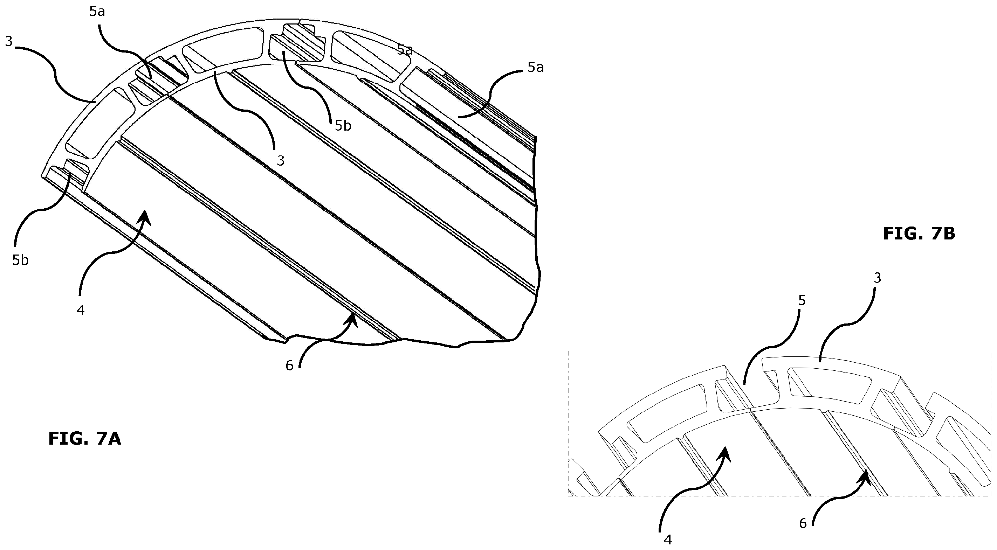

A second important advantage is that the outer layers of pre-impregnated carbon fibre fabric, which are subsequently laminated onto the external surface of the hollow profiles 3 to provide the necessary transverse strength and localized squashing strength, can be made of continuous tapes, equal in length to the expanding shaft with ledges, which are wrapped by means of conventional wrapping technology in the transverse direction and without discontinuity over the entire external surface of the hollow profiles 3 in mutual contact (Fig. 7A). The previous known solution (Fig. 7B), with silicone inserts inserted between the hollow profiles 3 to temporarily seal the channels 5, in fact, did not allow this technique of continuous wrapping of the pre-impregnated carbon fibre fabric to be performed correctly, due to the low hardness and low contrast offered by the silicone inserts during the step of lamination with pre-impregnated carbon fibre fabric. In the previously known technology, it was therefore necessary to manually lay longitudinal strips of pre-impregnated material on each individual hollow profile 3, with obvious difficulties in obtaining their correct positioning on expanding shafts with ledges of about 6 metres length.

Before applying the outer layers of pre-impregnated carbon fibre fabric, the hollow profiles 3 are locked in the mounting position by applying a heat-shrink film strip at the opposite ends of the expanding shaft with ledges - that is, in a portion of the expanding shaft with ledges intended to be removed afterwards, in the final machining - and possibly also by applying one or more thin intermediate clamps of pre-impregnated carbon fibre fabric. This temporary fastening allows the disassembly of the locking rings 11 described above, which made it possible to hold in place the individual hollow profiles 3 during the assembly step, and to free the entire lateral surface of the expanding shaft with ledges.

The above-described construction of the central body of the expanding shaft with ledges can thus be completed by applying an external covering 10 consisting of 4-5 layers of pre-impregnated carbon fibre fabric (0.2-0.3 mm being the indicative thickness of each layer) on the circumferential external surface of the hollow profiles 3. Thanks to the continuity of the external surface of the assembled hollow profiles 3, the external covering 10 can be applied in the form of a continuous tape having an height equal to the length of the expanding shaft with ledges, as mentioned above, thus providing the hollow profiles 3 with the necessary transverse strength and localised squashing strength, which would not be sufficiently provided by the unidirectional fibres making up the upper surface of said hollow profiles 3.

Finally, all components of the central body of the expanding shaft with ledges described above are locked in their correct position by means of a compacting heat-shrink film tape (by means of the same wrapping technology used to form the external covering 10). Also this taping step is significantly simplified by the surface continuity of the hollow profiles 3; the presence of discontinuities between the various hollow profiles of the prior art solution could in fact generate wrinkles in the heat-shrink film and problems of irregular compaction during moulding and autoclave polymerisation.

Once the taping with heat-shrink film is completed, the central body of the expanding shaft is ready to be sent to the autoclave for a co-polymerization step through application of pressure and temperature suitable for this purpose. The co-polymerization process forms then a single product wherein the different composing parts, each designed with its own specific function, are complimentary composed with high manufacturing reliability and simple manufacturing process.

Upon exiting the co-polymerization step, the central body of the expanding shaft with ledges is almost finished and therefore does not require any further invasive processing but only providing longitudinal rectangular access slots in all channels 5a and 5b, by machine removing the opposing, mutually contacting edges of the external wings of all the adjacent hollow profiles 3. In the area to be removed, the external wings of the hollow profiles 3 are specifically designed with a reduced thickness, to minimize the amount of material to be removed in this final machining step. This machining process also includes removing burrs from edges and corners and possibly smoothing the continuous external cylindrical surface formed by the hollow profile 3.

Therefore, the central body C of the expanding shaft with ledges obtained at the end of the manufacturing process of the invention differs from that of the known manufacturing process in a significantly reduced thickness of the inner tube 1 and hollow profiles 3. Such reduction in thickness - the mechanical performance of the central body C being the same - is achieved by using high modulus carbon fibres to form the intermediate layer 7 and thanks to the fact that the outer layer 10 is formed by multiple crossed layers by means of wrapping technology, rather than by parallel layers as necessarily occurs in the manufacturing process according to the previous known art where the external surface of the central body C is a discontinuous surface when the outer reinforcing layer 10 is formed.

The above-illustrated manufacturing process of the central body C of the expanding shaft with ledges according to the present invention, considering the technological complexity of this product, provides therefore for:
- low-thickness, lateral widenings of the external wings of the hollow profiles 3, to achieve a mutual contact between adjacent hollow profiles 3 in correspondence of their external surfaces too, and therefore to obtain a cylindrical and continuous external surface of the central body C of the expanding shaft with ledges;
- the use of pre-impregnated carbon fibre fabric, applied by means of wrapping technology on said continuous external surface consisting of the external surface of the hollow profiles 3 pultruded with carbon fibre only in the longitudinal direction, thus ensuring increased structural strength in the circumferential direction of the outer wall of the central body C of the expanding shaft with ledges, which can support even very high reel loads notwithstanding the lightening cavities provided inside the hollow profiles **3;**
- a multi-component co-polymerization, using a pre-impregnated carbon fibre-based material as a binder between the different components, eliminating the use of silicone inserts or metal mandrels to confine the resin away from the channels 5 provided between the hollow profiles 3 and intended to house the ledges;
- a final machining operation to remove said low-thickness lateral portions of the external wings of the hollow profiles 3, thus opening the necessary longitudinal access slots into the channels 5 of the expanding shaft with ledges.

Therefore, the composite central body C of the assembled expanding shaft with ledges mainly consists of four parts, namely:
- an inner tube 1, with indicative inner diameter of 110-112 mm and outer diameter of 121 mm, preferably made by means of filament winding technology, or alternatively by wrapping technology, and machined with longitudinal grooves 2 for centring the hollow profiles 3;
- hollow profiles 3, with lightening cavity and centring rib 6 and external wings with low-thickness lateral widenings, manufactured by pultrusion technology and with already roughened external surfaces (they are typically ten for 6" cores);
- pre-impregnated, typically unidirectional material or alternatively fabric, (about 0.3 mm indicative thickness of each layer) interposed between the inner tube 1 and the hollow profiles 3 pultruded in the assembly/co-polymerization step;
- continuous layers of pre-impregnated fabric on the outer continuous external surface (a coating 10 with about 0.25 mm indicative thickness of each layer) conventionally wrapped by means of wrapping technology during the assembly and lamination main step.

### Expanding shaft with ledges

The expanding shaft with ledges of the present invention is also designed in such a way that the load-bearing central body C made of carbon fibre composite material may be easily combined with shaft heads T of the expanding shaft itself, with a reliable and versatile constructive solution for the specific functionality of the same. The expanding shaft with ledges of the present invention further provides new constructive solutions also for the other main elements making up the assembly, so that the aforementioned advantages, relating to the manufacture of the load-bearing central body C in carbon fibre composite material, are combined with a reliable and versatile solution for the other specific functions of the expanding shaft with ledges as well.

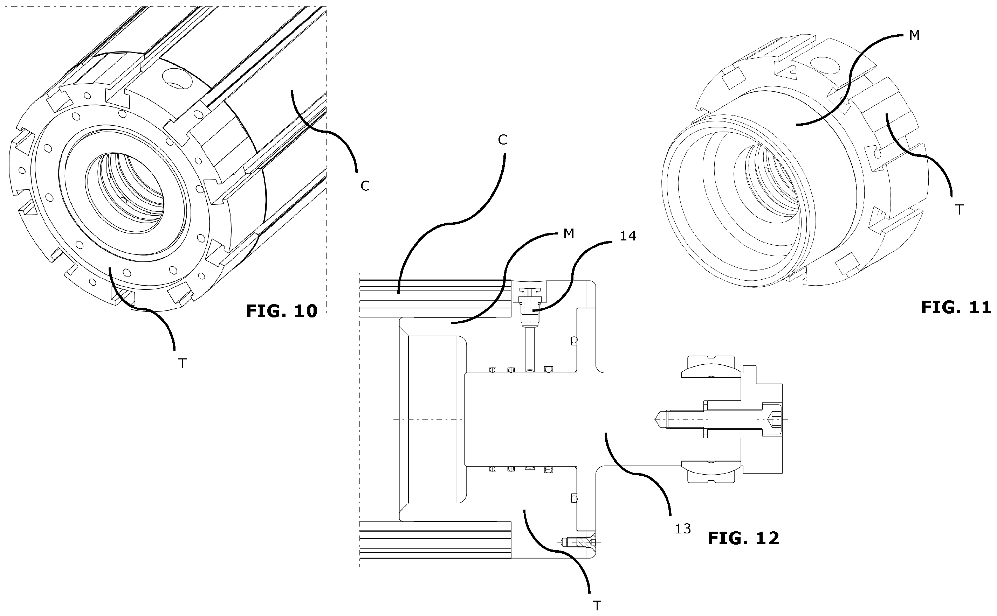

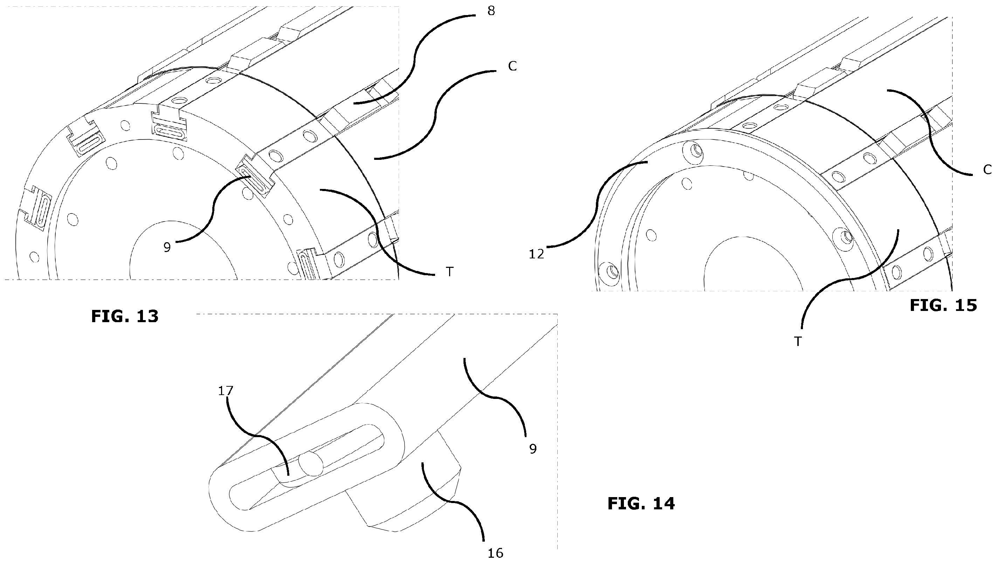

It is therefore provided that heads T, typically made of aluminium alloy, will be bonded to the aforementioned central body C made of composite material, which heads T provide both the fixing of the expanding shaft with ledges to the respective machine by means of suitable steel support journals 13, and air passages for connecting a supply valve 14 (fig. 12) to the air chambers 9 positioned at the bottom of the channels 5 (fig. 13). Each head T has in fact an inner sleeve M that precisely fits into the inner tube 1 and allows for stable anchoring of the head T by bonding with suitable adhesives to the inner tube **1.** At least one of the two heads T also includes an inner circumferential channel to allow the compressed air distribution from the supply valve 14, provided at least in one of said heads T, to the air chambers 9 housed in the channels 5 under the respective ledges 8.

Seats for sealing O-rings can be formed either on the heads T themselves or on the support journals 13. The solution with aluminium heads T bonded to the central body C allows for a high level of standardisation in the construction of the central body C of the expanding shaft with ledges, which is then customised for each individual customer only as regards the two steel support journals 13, which are mechanically mounted on the heads T for example by means of a threaded connection, and are therefore easily removable and replaceable.

In the manufacturing process of an expanding shaft with ledges according to the present invention an enhancing solution is proposed in the construction of the end support journals 13, by providing for the formation in their body of a plurality of lightening holes 15 which minimize the weight of the support journal 13 and its related rotational inertia.

The ledges 8 movement system, known per se, is of the pneumatic type, thanks to the inflation of air chambers 9 placed underneath each ledge 8 in the relative housing channels 5a or 5b, which are provided both in the load-bearing central body C made of composite material and in the aluminium heads T. The air passage directly occurs from the head T radial holes to the air chambers 9, via mushroom-shaped pegs 16 (fig. 14) having vent holes in the mushroom-shaped head 17 arranged inside the air chamber 9. Such pegs 16 are in fact positioned at the air chamber 9 end, and partially inserted into the same through a hole formed on its lower portion, while the peg 16 hollow stem is inserted in radial holes provided in the housing cavities formed in the head T.

The steps of assembly and disassembly of the expanding shaft with ledges (for example, during maintenance) are facilitated by using easily removable and repeatable components. In particular, the use of a closing ring 12 of the head T allows for disassembly and possible replacement of the air chambers 9 or of the ledges 8, without need to disassemble the end supports 13, which in turn are independently assembled with the head T.

A further notable manufacturing peculiarity which differentiates the expanding shaft with ledges of the present invention from the previously proposed known solution lies in the different configuration of the rubberized ledge 8 component.

The typical known construction of the rubberized ledge 8, in fact, provides for a steel plate, as a support base, on which a rubberized portion is applied which protrudes from the profile of the expanding shaft with ledges, as illustrated in fig. 13, when pressurized air is introduced into the air chamber 9. The upper surface of the rubberized portion is the locking area of each individual ledge 8 which is in contact with the inner surface of a reel core.

Therefore, in normal use, the expanding shaft with ledges rotates with the entire group of ledges 8 positioned externally to the cylindrical external surface of the expanding shaft with ledges, due to the pressurization of the air chambers 9. Precisely because of this peripheral and external position in respect of the body of the expanding shaft with ledges, the group of ledges 8 is responsible for vibration phenomena due to the same inertia of the ledges 8 and to local asymmetries in the radial direction caused by relatively wide geometric tolerances in the process of assembly and subsequent inflation of the air chambers 9.

By comparing the balancing of a semi-finished shaft - complete with central body C, heads T, and support journals 13, but without air chambers 9 and ledges 8 - with that of a finished expanding shaft with ledges, the negative impact of the ledges 8 presence on the balancing of the expanding shaft with ledges is clearly appreciated. In the first case, the semi-finished shaft has a much more regular balancing and higher speed limits than the finished expanding shaft with ledges, which instead shows vibration phenomena even at significantly lower rotational speed.

Therefore, in the improved manufacturing process according to the invention, two important aspects are further improved: the ledges 8 rotational inertia; the radial dimensional variations of the expanding shaft with ledges, as measured on the ledges 8 peripheral sides when the air chambers 9 are pressurized.

### Rotational inertia of the ledges

To improve the inherent rotational inertia of the ledges 8, the material they are made of has been modified and a new construction process has been used: the steel plate traditionally used as a support base for the rubberized portion of the ledges 8 has been replaced in fact by a plate of carbon fibre composite material, made up of superimposed layers of bidirectional fabric or unidirectional fibre pre-impregnated with resin.

This results in both a significant overall weight reduction for the expanding shaft with ledges - due to the significant density difference between steel and carbon fibre composite material and to the overall volume of the ledges which are on average ten in number and extend across the entire working length of the expanding shaft with ledges - and a significant reduction in rotational inertia and vibrations, given that the weight reduction occurs at the periphery of the expanding shaft with ledges and that the composite material has a better damping factor than metal.

The following rubberizing step involves a step-by-step process which uses as the support material typically over 10 meters long strips wound on reels and rubberized ledges also supplied in reels. The composite material support plate can thus be produced with the following two different manufacturing methods.

In the first manufacturing method, the ledges are obtained by moulding from a flat sheet made of superimposed layers of bidirectional fabric pre-impregnated with epoxy resin. To achieve the unconventional length wound in a reel, a specific, though uncommon, moulding technology is used, consisting of a hot-plate press and repeated step advancement of the flat sheet (the step length corresponding to the press length) upon completion of the polymerization step with a hot-hot cycle. The pre-impregnated material enters the about 3-4 meters long press already set to the polymerization temperature; after about 20-30 minutes, once polymerization is complete, the press is opened to advance the pre-impregnated material to the next step. The various rolls of pre-impregnated carbon fibre fabric are mounted on a roller conveyor upstream of the press and are coupled before entering the press. At the exit, the printed sheet is wound onto a take-up reel fed by a motorized spoke presser which drives the advancement and winding motion of the polymerized composite material. This hot-hot moulding step technology is usually used to manufacture typically 150 meters long doctor blades in composite material for the paper industry.

The top surface of the polymerized sheet is preferably roughened already during the moulding process to ensure then proper adhesion of the rubberized portion during the subsequent rubberizing step. This is achieved by applying a peel-ply layer directly during the moulding process, which is then removed when the polymerized sheet exits the moulding step and is wounded into a reel, or directly during the reel unwinding, prior to the rubberizing step.

The continuous sheet can be easily produced in long and modular lengths. The wound sheet is then cut into individual strips of increased width, which are compacted by strapping. Finally, the strip wound into a reel can be processed by positioning it flat to the finished width in two steps (on both sides) using a calibration machine with special external fixtures for circumferential clamping.

The second method for manufacturing the composite material plate provides for the use of unidirectional carbon fibre impregnated with epoxy resin and polymerized by means of continuous pultrusion technology. In this case, a single strip at a time can be produced or, preferably, a multi-die pultrusion mould can be used to continuously produce in parallel multiple strips of a finite width (typically about 15 mm). In this case too, strips of peel-ply tape are applied to one surface of the plate to provide the necessary roughening for better adhesion of the rubber portion. This second construction method avoids the mechanical operation of sheet cutting and calibration. However, limitations on the winding radius and length due to the unidirectional composite greater stiffness must be considered, and also the higher level of criticality of the subsequent steps of rubberization and related rewinding, assembly into the expanding shaft with ledges, and use (in fact, axial crack initiation can occur, given the strip low thickness and the lack of transverse fibres). The ledges, in fact, are normally subject to bending during manufacturing and sometimes even during assembly of the expanding shaft with ledges; a certain degree of flexibility in the plate is therefore preferred. In a preferred embodiment, to overcome the afore mentioned drawbacks and reduce the stiffness and fragility of the pultruded plate, two thin tapes (0.8-1.5 mm thick) of non-woven carbon fibre fabric are inserted in the same pultrusion step, correspondingly reducing the unidirectional-fibre layer thickness. Such simple adjustment to the structure composition of the plate supporting the ledges 8 is sufficient to impart greater mechanical strength to said plate even in the transverse direction, which proves to be very useful in the subsequent rubberizing process and in assembling the ledges 8.

Finally, the composite plates produced according to the two construction methods described above are sent to the rubberizing step. For this final step to be successful, the epoxy resin used to form the composite material sheet must exhibit good toughness and high temperature resistance, in order to prevent breakage or deformation of the sheet itself in the rubber vulcanization step, which is a very critical step due to the high vulcanization temperature and the different thermal expansions of the various involved materials inside the mould.

There is currently no evidence on the market of a rubberized ledge for expanding shafts, the support base of which consists of a composite material plate. This solution represents a significant improvement for the kind of expanding shafts featuring high length, stringent weight reduction requirements, and very high rotational speeds and accelerations.

### Reduction of the radial dimensional variations

The second improvement, which represents a particularly suitable embodiment for critical fields of application in terms of rotational speed and/or acceleration, concerns an optimization of the radial dimensional variations of the finished expanding shaft with ledges, which dimensional variations are correlated to imperfections or tolerances in the assembly process of the various components.

To achieve such optimization, following the final assembly step of the expanding shaft with ledges, a further levelling step of the ledges 8 is provided, carried out by machining on an outer circumference thereof, coaxial to the expanding shaft with ledges - typically a grinding of few millimetres, which does not affect the ledges 8 service life - while the ledges 8 are maintained in the maximum expansion position by the air chambers 9 pressurization, until a minimum radial eccentricity is obtained, thus optimizing the step of rotation and related final balancing, thereby obtaining high performance at maximum balancing speed. During this grinding operation, the ledges 8 upper profile in cross-section is accordingly modified from a flat shape to a slightly curved arc, thus also improving the contact with the inner surface of the reel core.

The machining on the outer diameter of the assembled and pressurized expanding shaft with ledges must be preferably carried out in two separate operations: a first operation for the five ledges 8 which first come into contact with the core, i.e. those with the shortest stroke, which are responsible for the core automatic centring, and a second operation for the other five ledges 8 which come into contact with the core later, i.e. those with the longest stroke.

From the preceding description it is clear how the expanding shaft with ledges of the present invention has fully achieved all the intended objects and has also achieved further advantages, as follows:
- an expanding shaft with ledges, typically for 6" or larger diameter reel cores, featuring high lightness and improved vibration reduction performance during high-speed operation or acceleration, which provides for the use of low-inertia ledges 8 manufactured through the combination of a base support plate, made of carbon fibre-reinforced composite material, and a rubber portion integrated onto the composite material base plate;
- an expanding shaft with ledges for 6" or larger cores , wherein the composite material for the base plate of the ledges is made up of superimposed layers of carbon fibre fabric pre-impregnated with epoxy resin, in the form of a sheet obtained by means of continuous press step moulding technology and then cut into strips, or of bundles of unidirectional carbon fibres impregnated with epoxy resin, possibly integrated with surface tapes of non-woven carbon fibre fabric, directly in the form of a finite width strip obtained by means of multi-die pultrusion technology. Said composite material strips are wound into long reels to meet the requirements of the subsequent moulding process of the rubber portion, which moulding process is critical due to the high temperatures and the different deformations of the materials in the mould;
- an expanding shaft with ledges for 6" or larger cores , of complex geometry, having a cross-sectional shape comprising lightening portions - mainly obtained through semi-finished hollow profiles consolidated in a moulding process - which semi-finished hollow profile are provided with widened external wings, so that they are substantially in mutual contact after assembly;
- an expanding shaft with ledges for 6" or larger cores , wherein in a processing step the central body semi-finished product features a continuous external surface, and allows therefore the complete circumferential wrapping with external layers of carbon fibre fabric pre-impregnated with epoxy resin, by means of wrapping technology, in the absence of longitudinal silicone inserts or metal mandrels of a geometry complementary to the ledge-housing channels - as provided in the known art - thus avoiding the expensive issues of the subsequent extraction step of the silicone inserts or the mandrels;
- an expanding shaft with ledges for 6" or larger cores , featuring high lightness thanks to the minimized thickness of the central body C components in carbon fibre composite material, wherein lightening holes 15 are provided on the metal components of the heads T of the expanding shaft with ledges, such as bonded aluminium heads or end support journals 13.
- an expanding shaft with ledges for 6" or larger cores , with a central body C entirely made of carbon fibre composite material which, thanks to its low inertia, is able to reach much higher rotational speeds than metal or metal-composite hybrid counterparts, especially in the case of shafts of considerable length where the low critical speed of the metal shafts limits the possible increase in output rate on the machinery (for example in the paper and nonwoven manufacturing mills);
- an expanding shaft with ledges for 6" or larger cores, made with an innovative concept which involves the integration of multiple elements made of carbon fibre composite material by means of various technologies, and an assembly method of said elements via co-lamination, said elements being mutually complementary both in geometry and in structural and application functionality;
- an expanding shaft with ledges for 6" or larger cores , with a load-bearing central body C suitable for supporting high loads even in the case of considerable lengths (possible applications up to 6 metres of useful length) and large reels or for critical applications with multiple, spaced apart reels of reduced width (where the stiffening effect provided by the single reel is lacking). In particular, since the expanding shaft with ledges has fibres oriented in the various directions - both in the inner tube 1, and possibly in the binding layer 7, and, finally, in the external covering 10 as well - it is able to support stresses in the longitudinal direction (prevalent), but also in the transverse and torsional directions (unlike the expanding shafts entirely made by pultrusion technology);
- an expanding shaft with ledges for 6" or larger cores, manufactured with a repeatable manufacturing process, final geometry of the expanding shaft section almost finished and with low waste content ('net-shape'), where the processing steps are minimized in both time and cost (unlike the expanding shafts manufactured by machining from solid, typically for smaller or keyed expanding shafts);
- an expanding shaft with ledges for 6" or larger cores , which can be used to create different versions depending on the specific model, the customer's needs and the size of the expanding shaft with ledges, using the same basic configuration of the central body C, and which therefore allows for a high level of standardisation of the components according to length variants, the only customization being confined to the end support journals 13 which in turn can be mechanically removed from the heads;
- an expanding shaft with ledges for 6" or larger cores , which meets the increasingly stringent safety and long-life requirements requested by users, given the high structural strength of the central body C made of carbon fibre composite materials, and the associated high safety factors, both static and dynamic, and fatigue resistance especially, for the applications described above. This also allows for a potential extension of the useful life of the expanding shaft with ledges,
with careful monitoring and periodic maintenance provided by the manufacturer.

However, it is understood that the invention should not be considered as limited to the specific arrangements illustrated above, which are only exemplary embodiments thereof, but that different variants are possible, all within the reach of a person skilled in the art, without thereby departing from the scope of protection of the invention itself, which is only defined by the following claims.

## Claims

1. Manufacturing process of an expanding shaft with ledges for the rotary support of film reels, said expanding shaft with ledges comprising
- a cylindrical central body (C) entirely made of carbon fibre composite materials and provided with multiple longitudinal channels (5) for housing ledges (8) and respective underlying air chambers (9) for operating said ledges (8), and
- heads (T) fixed to the opposite ends of the central body (C), which allow both the rotary support of said central body (C) and the supply of compressed air to said air chambers (9),
wherein said manufacturing process comprises the following manufacturing steps of said central body (C):
a. forming an inner tubular portion (1) with crossed fibres by means of filament winding or wrapping technologies;
b. forming a plurality of outer longitudinal portions (3) with parallel fibres by means of pultrusion technology, said longitudinal portions (3) being delimited by an inner cylindrical surface, an external cylindrical surface and two opposed lateral surfaces;
c. forming a binding layer (7) of pre-impregnated carbon fibre-based material with parallel or crossed fibres on the external surface of said tubular portion (1);
d. juxtaposing said plurality of outer longitudinal portions (3) on the entire external surface of said tubular portion (1), in such a way as to form a cylindrical surface in contact with said tubular portion (1) with their inner cylindrical surfaces,
**characterized in that** in said step d.), said plurality of outer longitudinal portions (3)
i. form a continuous external cylindrical surface of said central body (C) with their external cylindrical surfaces in mutual contact, and
ii. delimit, with their lateral surfaces, closed longitudinal channels (5),
**and in that** it further comprises the following steps
e. applying by means of wrapping technology on said continuous external cylindrical surface of the central body (C) an external covering (10) consisting of a continuous tape of pre-impregnated material based on crossed carbon fibres;
f. carrying out a step of autoclave co-polymerisation of the article thus composed;
g. removing by machining a lateral portion from the external cylindrical surface of said longitudinal portions (3), in the contact area between adjacent longitudinal portions (3), to form longitudinal slots in said channels (5); and
h. accommodating said ledges (8) and respective underlying air chambers (9) inside said channels (5) and said longitudinal slots.

2. Manufacturing process of an expanding shaft with ledges according to claim 1, wherein said tubular portion is in the form of an inner tube (1) and said longitudinal portions are in the form of hollow profiles (3).

3. Manufacturing process of an expanding shaft with ledges according to claim 2, wherein in said step b) the inner cylindrical surface and the external cylindrical surface of said hollow profiles (3) are provided with a predefined surface roughness by coating the unidirectional carbon fibre material, on both said surfaces, with a peel-ply tape, directly in the pultrusion process.

4. Manufacturing process of an expanding shaft with ledges according to claim 2, wherein in said step d) the positioning of said hollow profiles (3) on the surface of said inner tube (1) is facilitated by the coupling between longitudinal grooves (2), formed by milling on the external surface of the inner tube (1), and corresponding longitudinal ribs (6) provided on the inner cylindrical surface of said hollow profiles (3).

5. Manufacturing process of an expanding shaft with ledges according to claim 4, wherein in said step c) said binding layer (7) is wrapped around the inner tube (1) in a continuous form by means of wrapping technology or, alternatively, in longitudinal strips arranged between pairs of adjacent longitudinal grooves (2), thus leaving said grooves (2) uncovered.

6. Manufacturing process of an expanding shaft with ledges according to claim 2, wherein before said co-polymerization step f), all the different components of the central body (C) are blocked in a correct position by a compacting heat-shrink film tape.

7. Manufacturing process of an expanding shaft with ledges according to claim 2, wherein said step g) also includes removing burrs on the edges and corners and, optionally, smoothing the external cylindrical surface of the central body (C).

8. Manufacturing process of an expanding shaft with ledges according to claim 2, wherein aluminium heads (T) are joined to said central body (C) exiting said step h), by bonding a sleeve (M) thereof to the inner surface of said inner tube (1), said heads (T) being equipped with steel support journals (13) which allow the expanding shaft with ledges to be rotatably attached to a respective machine, at least one of said heads (T) further comprising an inner circumferential channel to allow the distribution of compressed air from a supply valve (14) provided in one of said heads (T) to the air chambers (9) housed in the channels (5).

9. Semi-finished central body (C) of an expanding shaft with ledges for the rotary support of film reels, said expanding shaft with ledges comprising
- a cylindrical central body (C) entirely made of carbon fibre composite materials and provided with multiple longitudinal channels (5) for housing ledges (8) and respective underlying air chambers (9) for operating said ledges (8), and
- heads (T) fixed to the opposite ends of the central body (C), which allow both the rotary support of said central body (C) and the supply of compressed air to said air chambers (9),
wherein said central body (C) is comprised of an inner tubular portion (1) and a plurality of outer longitudinal portions (3) juxtaposed on the entire external surface of said inner tubular portion (1) and joined thereto through a binding layer (7), **characterised in that** said longitudinal portions form, with their external cylindrical surface, a continuous external cylindrical surface of said semi-finished central body (C), and delimit, with their lateral surfaces, closed longitudinal channels (5) **and in that** said continuous external cylindrical surface of said semi-finished product of the central body (C) is provided with an external covering (10) consisting of a continuous winding of a composite material based on crossed carbon fibres.

10. Expanding shaft with ledges for the rotary support of film reels, comprising a cylindrical central body (C) provided with multiple longitudinal channels (5) for housing ledges (8) and respective underlying air chambers (9) for operating said ledges (8), and heads (T) fixed to the opposite ends of said central body (C) to allow its rotation and the supply of compressed air to said air chambers (9), **characterised in that** said central body (C) consists of a semi-finished central body according to claim 9, wherein each of said longitudinal channels (5) is further provided with a rectangular slot formed in said continuous external cylindrical surface of the semi-finished product and wherein said ledges (8) comprise a support base of composite material and a rubber portion vulcanized onto said support base.

11. Expanding shaft with ledges according to claim 10, wherein said composite material support base is cut out from a flat sheet obtained by moulding and polymerisation of multiple superimposed layers of bidirectional carbon fibre fabric pre-impregnated with epoxy resin.

12. Expanding shaft with ledges according to claim 10, wherein said composite material support base is obtained through a moulding and pultrusion polymerization process of multiple superimposed layers of unidirectional carbon fibres pre-impregnated with epoxy resin.

13. Expanding shaft with ledges according to claim 12, wherein said superimposed layers of unidirectional carbon fibres are integrated with surface tapes of non-woven carbon fibre fabric.

14. Expanding shaft with ledges according to claim 11, 12 or 13, wherein said support base is superficially roughened on the side to be coupled to the rubberized portion during the moulding process.

15. Expanding shaft with ledges according to any one of claims 10 to 14, wherein the outer rubberized portion of said ledges (8) is ground according to a cylindrical surface coaxial to the expanding shaft with ledges.
